# EUROPÄISCHE PATENTANMELDUNG

(11) **EP 4 563 303 A1**
(43) Veröffentlichungstag der Anmeldung: **04.06.2025**
(21) Anmeldenummer: 24205955.8
(22) Anmeldetag: 10.10.2024
(51) Int. Cl.: B25J 15/00, B25J 15/06

(54) **UNTERDRUCKHANDHABUNGSVORRICHTUNG UND UNTERDRUCKHANDHABUNGSSYSTEM ZUM GREIFEN EINES OBJEKTS**

(30) Priorität: 30.11.2023 DE 102023133603
(71) Anmelder: J. Schmalz GmbH, 72293 Glatten (DE)
(72) Erfinder: Reinisch, Hermann, 72175 Dornhan (DE); Günther, Martin, 72293 Glatten (DE); Stockburger, Ralf, 72293 Glatten (DE)
(74) Vertreter: DREISS Patentanwälte PartG mbB

(57) **Zusammenfassung**

Die Erfindung betrifft eine Unterdruckhandhabungsvorrichtung (1) mit einem Basiskörper (3), einem an dem Basiskörper (3) schwenkbar gelagerten Schwenkarm (5) und zumindest zwei Saugstellen zum Greifen eines Objekts, wobei die Unterdruckhandhabungsvorrichtung (1) vorzugsweise am Basiskörper (3) eine erste Saugstelle (7) aufweist, wobei der Schwenkarm (5) eine zweite Saugstelle (9) aufweist, wobei die zweite Saugstelle (9) an dem Schwenkarm (5) derart längenverstellbar angeordnet ist, dass ein Abstand zwischen der zweiten Saugstelle (9) und dem Basiskörper (3) auf einen ersten Abstand und einen zweiten Abstand pneumatisch angetrieben einstellbar ist, wobei der Schwenkarm (5) zwischen einer ersten Schwenkstellung und einer zweiten Schwenkstellung pneumatisch angetrieben verschwenkbar ist.

## Beschreibung

Die Erfindung betrifft eine Unterdruckhandhabungsvorrichtung zum Greifen eines Objekts sowie ein Unterdruckhandhabungssystem mit einer Mehrzahl solcher Unterdruckhandhabungsvorrichtungen.

Unterdruckhandhabungsvorrichtungen und -systeme der vorstehend genannten Art sind aus dem Stand der Technik bekannt. Diese dienen der Handhabung von Objekten, beispielsweise im Bereich der Produktion, insbesondere Bauteilfertigung. Zum Greifen von Objekten ist eine Vielzahl verschiedener Unterdruckhandhabungsvorrichtungen bekannt, welche jeweils auf ein spezifisches Objekt abgestimmt ausgebildet sind. Wenn die Anforderung besteht, dass verschiedenartige Objekte in kurzen Zeitabständen zu greifen sind, ist es jedoch umständlich die verwendeten Unterdruckhandhabungsvorrichtung gegen eine alternative, auf das Objekt angepasste Unterdruckhandhabungsvorrichtung auszutauschen, wodurch der Handhabungsprozess und/oder die Produktion insgesamt ausgebremst werden. Zudem ist es logistisch und in der Bedienung aufwendig und teuer, mehrere verschiedenartige Unterdruckhandhandhabungsvorrichtungen vorzuhalten und bedarfsfallspezifisch einzusetzen.

Auch bekannt in diesem Zusammenhang sind variabel anpassbare Unterdruckhandhabungsvorrichtungen, welche an eine jeweilige Objektgeometrie angepasst werden, indem mehrere, verstellbare Saugstellen der Unterdruckhandhabungsvorrichtung vorgesehen sind, die in Abhängigkeit von der Objektgeometrie verlagert werden. Derartige Unterdruckhandhabungsvorrichtung sind allerdings je nach Anwendungsfall zu langsam.

Der Erfindung liegt daher die Aufgabe zugrunde, die Handhabung von einer Folge von verschiedenen Objekten zu beschleunigen und den dabei erforderlichen betrieblichen und finanziellen Aufwand möglichst gering zu halten.

Diese Aufgabe wird erfindungsgemäß durch eine Unterdruckhandhabungsvorrichtung mit den Merkmalen des Anspruchs 1 gelöst. Die Unterdruckhandhabungsvorrichtung weist einen Basiskörper, einen an dem Basiskörper schwenkbar gelagerten Schwenkarm und zumindest zwei Saugstellen zum Greifen eines Objekts auf, wobei die Unterdruckhandhabungsvorrichtung vorzugsweise am Basiskörper eine erste Saugstelle aufweist, wobei der Schwenkarm eine zweite Saugstelle aufweist, wobei die zweite Saugstelle an dem Schwenkarm derart längenverstellbar angeordnet ist, dass ein Abstand zwischen der zweiten Saugstelle und dem Basiskörper auf einen ersten Abstand und einen zweiten Abstand pneumatisch angetrieben einstellbar ist, wobei der Schwenkarm zwischen einer ersten Schwenkstellung und einer zweiten Schwenkstellung pneumatisch angetrieben verschwenkbar ist. Dadurch ist ein sehr schnelles Verstellen und somit Anpassen an eine veränderte Objektgeometrie ermöglicht.

Vorzugsweise ist die zweite Saugstelle im ersten Abstand und/oder im zweiten Abstand in einer - bezüglich der Längenverstellrichtung - endständigen Endstellung angeordnet. In einer ersten Endstellung ist die zweite Saugstelle also im ersten Abstand zum Basiskörper angeordnet. In einer zweiten Endstellung ist die zweite Saugstelle im zweiten Abstand zum Basiskörper angeordnet. Als Endstellung wird dabei eine solche Stellung verstanden, in welcher eine weitere Verlagerung in zumindest eine Richtung der Längsrichtung - also in Richtung von dem Basiskörper weg und/oder in Richtung auf den Basiskörper zu - derart blockiert ist, dass eine weitere Verlagerung in diese Richtung unmöglich ist.

Unter einer Längsrichtung wird hier insbesondere eine Richtung von der ersten Abstandsposition zur zweiten Abstandsposition oder umgekehrt, also von der zweiten Abstandsposition zur ersten Abstandsposition, verstanden. Eine Länge bezieht sich somit insbesondere auf einen Abstand der zweiten Saugstelle und/oder eine Länge des Schwenkarms insgesamt.

Unter einer Schwenkstellung wird hier insbesondere eine Stellung des Schwenkarms verstanden, welche durch ein Verschwenken des Schwenkarms um eine Schwenkachse erreichbar ist, wobei die Schwenkbewegung in Umfangsrichtung um die Schwenkachse erfolgt. Die Schwenkstellungen stellen dabei in einer jeweiligen Schwenkrichtung eine Endstellung dar, in welcher der Schwenkarm fixiert ist. Zum Fixieren kann eine Feststellvorrichtung vorgesehen sein, welche den Schwenkarm in der ersten und/oder zweiten Schwenkstellung mechanisch und/oder pneumatisch fixiert. Alternativ oder zusätzlich ist der Schwenkarm in den beiden Schwenkstellungen pneumatisch fixiert.

Die oben erwähnten Endstellungen bezüglich der Längsverstellung als auch bezüglich des Verschwenkens sind vorzugsweise derart zu verstehen, dass eine Bewegung, also eine Langenverstellung und ein Verschwenken, ausschließlich zwischen diesen Endstellungen erfolgen kann, sodass die Endstellungen jeweils Endpunkte bezüglich der jeweiligen Bewegung - Längenverstellung beziehungsweise Verschwenken - darstellen.

Dabei ist zwischen der ersten Schwenkstellung und der zweiten Schwenkstellung ein Winkel eingeschlossen, der vorzugsweise kleiner als 180°, ferner bevorzugt kleiner als 90°, besonders bevorzugt kleiner als 45° ist.

Der Schwenkarm ist dabei vorzugsweise an dem Basiskörper in einem Drehpunkt derart schwenkbar befestigt, dass die Schwenkachse zumindest einen Abschnitt des Basiskörpers durchgreift. Dadurch ist eine Orientierung des Schwenkarms ausgehend von dem Basiskörper einstellbar.

Der Schwenkarm ist pneumatisch derart verschwenkbar an dem Basiskörper angelagert ist, dass - ausgehend von der Schwenkachse und somit ausgehend von dem Basiskörper - eine Richtung der zweiten Saugstelle zwischen einer ersten Richtung und einer zweiten Richtung pneumatisch einstellbar ist. Dadurch ist es möglich, zwischen der ersten und zweiten Schwenkstellung besonders schnell - insbesondere hin und her - zu wechseln.

Die Schwenkbewegung wird dabei bevorzugt von einer insbesondere physischen Anschlagstruktur begrenzt, sodass der Schwenkarm beim Verlagern in die erste Schwenkstellung an eine erste Anschlagstruktur anschlägt und in der ersten Schwenkstellung vorzugsweise an der ersten Anschlagstruktur anliegt, und beim Verlagern in die zweite Schwenkstellung an eine zweite Anschlagstruktur anschlägt und in der zweiten Schwenkstellung vorzugsweise an der zweiten Anschlagstruktur anliegt.

Vorzugsweise ist die Unterdruckhandhabungsvorrichtung derart ausgebildet und eingerichtet, dass zumindest eine Schwenkbewegung - also von der ersten Schwenkstellung in die zweite Schwenkstellung und/oder von der zweiten Schwenkstellung in die erste Schwenkstellung - pneumatisch durchführbar ist. Besonders bevorzugt ist der Schwenkarm in beide Richtungen - also von der ersten Schwenkstellung in die zweite Schwenkstellung und von der zweiten Schwenkstellung in die erste Schwenkstellung - pneumatisch angetrieben verschwenkbar. Dadurch können die ohnehin vorhanden Pneumatikelemente zumindest teilweise mehrfach genutzt werden, sodass die mit der pneumatischen Betätigung einhergehenden Vorteile, insbesondere die Schnelligkeit beim Verschwenken des Schwenkarms, mit vergleichsweise geringem Aufwand und Kosten einhergehen.

Alternativ bevorzugt ist der Schwenkarm von der ersten Schwenkstellung in die zweite Schwenkstellung pneumatisch angetrieben verschwenkbar, wobei zum Rückstellen des Schwenkarms von der zweiten Schwenkstellung in die erste Schwenkstellung ein Federmechanismus vorgesehen ist, wobei der Federmechanismus den Schwenkarm in Richtung der ersten Schwenkstellung zurückdrängt. Dadurch können zusätzliche kompliziertere Pneumatikelemente vermieden und somit Kosten und/oder konstruktiver Aufwand geringgehalten werden.

Vorzugsweise erfolgt das Rückstellen des Schwenkarms von der zweiten Schwenkstellung in die erste Schwenkstellung zusätzlich oder alternativ zum federgetriebenen Rückstellen auch pneumatisch angetrieben, sodass insgesamt ein zuverlässiges und schnelles Rückstellen erfolgen kann.

Besonders bevorzugt sind genau zwei Schwenkstellungen des Schwenkarms vorgesehen. Alternativ oder zusätzlich ist es bevorzugt, dass genau zwei Abstände, also der erste Abstand und der zweite Abstand zwischen der zweiten Saugstelle und dem Basiskörper, pneumatisch angetrieben einstellbar sind. Dadurch ist eine Unterdruckhandhabungsvorrichtung geschaffen, mittels welcher der Schwenkarm sehr schnell verschwenkbar ist, wobei der konstruktive Aufwand niedrig gehalten ist.

Alternativ ist zumindest ein erstes Arretierelement, welches auch als Schwenk-Arretierung bezeichnet werden kann, vorgesehen und derart angeordnet, dass der Schwenkarm in eine dritte Schwenkstellung pneumatisch angetrieben verstellbar ist. Dabei wird der Schwenkarm beim Verschwenken und bei betätigtem ersten Arretierelement in der dritten Schwenkstellung zum Stillstand gebracht. Vorzugsweise ist das erste Arretierelement manuell, elektrisch und/oder pneumatisch betätigbar.

Gemäß einer spezifischen Weiterbildung der Erfindung ist vorgesehen, dass der Basiskörper eine Stufe aufweist. Dabei ist der Basiskörper besonders bevorzugt winkelförmig und/oder L-förmig aufgebaut. Der Schwenkarm ist auf einer Oberseite der Stufe angeordnet und erstreckt sich vorzugsweise parallel zu einer Oberfläche der Oberseite in Richtung parallel zur Oberfläche. Die erste Saugstelle ist bevorzugt auf einer der Oberseite abgewandten, insbesondere gegenüberliegenden Unterseite des Basiskörpers angeordnet. Die Unterseite liegt dabei vorzugsweise in einer zur Schwenkachse senkrechten Ebene gemeinsam mit einer Befestigungsstelle des Schwenkarms, an welcher die zweite Saugstelle angeordnet ist.

Besonders bevorzugt wird die erste Saugstelle von einem zum Basiskörper separat ausgebildeten ersten Saugkörper und die zweite Saugstelle von einem zum Schwenkarm separat ausgebildeten zweiten Saugkörper bereitgestellt. Dadurch können - insbesondere im Defektfall oder um die Unterdruckhandhabungsvorrichtung an einen alternativen Einsatz anzupassen - die Saugkörper einfach ausgetauscht werden, ohne die komplette Unterdruckhandhabungsvorrichtung auswechseln zu müssen. Indem die zuvor erwähnte Unterseite des Basiskörpers und die Befestigungsstelle in derselben Ebene liegen, können zudem als erster und zweiter Saugkörper baugleiche Teile verwendet werden, ohne dass sich dadurch die Geometrie der Unterdruckhandhabungsvorrichtung ein daraus resultierendes Ansaugverhalten verändert würde.

Alternativ ist die zweite Saugstelle unmittelbar am Schwenkarm und einstückig mit diesem Schwenkarm, und/oder die erste Saugstelle unmittelbar am und einstückig mit dem Basiskörper ausgebildet, wodurch zusätzliche Bauteile vermieden sind.

Ferner bevorzugt sind exakt zwei Abstände für die zweite Saugstelle einstellbar, wobei die pneumatische Längsverstellung durch Anschlagstrukturen begrenzt wird, wodurch zwei gegenüberliegende Endstellungen definiert sind, in welchen die beiden Abstände, also der erste und der zweite Abstand zwischen der zweiten Saugstelle und dem Basiskörper realisiert sind.

Alternativ ist zumindest ein dritter Abstand pneumatisch angetrieben einstellbar, wobei der dritte Abstand dadurch einstellbar ist, dass ein zweites Arretierelement, welches auch als Längsarretierung, bezeichnet werden kann, betätigt wird. Das zweite Arretierelement ist dabei ausgebildet und eingerichtet, um die Saugstelle in dem dritten Abstand zum Basiskörper zu stoppen, wenn die Saugstelle von dem ersten Abstand in den zweiten Abstand oder von dem zweiten Abstand in den ersten Abstand verlagert wird. Das zweite Arretierelement ist vorzugsweise manuell, elektrisch und/oder pneumatisch betätigbar. Vorzugsweise befindet sich die zweite Saugstelle im dritten Abstand in einer Zwischenstellung zwischen der ersten und zweiten Endstellung. Dadurch ist die Unterdruckhandhabungsvorrichtung noch flexibler an verschiedene Objekte anpassbar.

Vorzugsweise weist die Unterdruckhandhabungsvorrichtung eine Unterdruckversorgungseinrichtung zum Versorgen der Saugstellen mit Unterdruck auf. Dazu sind Druckleitungen vorgesehen, welche eine Unterdruckseite der Unterdruckversorgungseinrichtung mit der ersten und zweiten Saugstellen insbesondere strömungstechnisch verbinden. Dadurch kann an der ersten und zweiten Saugstelle ein Unterdruck angelegt und damit das Objekt angesaugt und gegriffen werden.

Gemäß einer Weiterbildung der Erfindung ist vorgesehen, dass die erste Saugstelle und/oder die zweite Saugstelle quer zur Längsrichtung und quer zur Schwenkrichtung vorzugsweise pneumatisch angetrieben höhenverstellbar ausgebildet sind. Dadurch sind die Saugstellen besonders präzise platzierbar und individuell einstellbar, sodass auch eine komplexere, insbesondere dreidimensionale Objektoberfläche sicher gegriffen werden kann.

Unter einer Höhenverstellung wird hier insbesondere ein Verstellen der Saugstellen in Richtung einer Saugrichtung und/oder in Richtung der Schwenkachse verstanden, wobei die Höhenverstellung vorzugsweise eine linear eindimensionale, translatorische Bewegung darstellt. Die Höhenverstellung erfolgt bevorzugt quer zu einer Schwenkebene, in welcher der Schwenkarm verschwenkt wird und/oder quer zur Längsverstellung. Insbesondere erfolgt die Höhenverstellung nicht in derselben Richtung wie das Verschwenken und nicht in derselben Richtung wie die Längsverstellung.

Gemäß einer Weiterbildung der Erfindung ist vorgesehen, dass die erste Saugstelle - zumindest in Längsrichtung und in Schwenkrichtung - ortsfest an dem Basiskörper angeordnet ist. Dadurch ist die Unterdruckhandhabungsvorrichtung insgesamt robuster und weniger defektanfällig, wobei dennoch die gewünschte Flexibilität, um verschiedenartige und -geformte Objekte zu handhaben, erreicht wird.

Vorzugsweise ist die erste Saugstelle versetzt zur Schwenkachse angeordnet, sodass die Schwenkachse nicht durch die erste Saugstelle führt.

Die erste Saugstelle ist dabei also weder verschwenkbar noch hinsichtlich ihres Abstands verstellbar. Vorzugsweise ist die erste Saugstelle auch nicht bezüglich einer Höhenverstellung verstellbar ausgebildet. Dadurch ist die Unterdruckhandhabungsvorrichtung insgesamt sehr stabil und einfach konstruierbar, sodass auch die Herstellungskosten geringer sind.

Alternativ ist die erste Saugstelle aber zumindest schwenkbar und/oder höhenverstellbar. Dadurch ist die Unterdruckhandhabungsvorrichtung noch flexibler an verschiedene Einsatzzwecke anpassbar.

Gemäß einer Weiterbildung der Erfindung ist vorgesehen, dass der Basiskörper zum Verschwenken des Schwenkarms ein pneumatisch verlagerbares Stellglied aufweist, welches mit einem mit dem Schwenkarm rotationsfest verbundenes Drehkulissenteil ineinandergreift, wobei durch lineare Verlagerung des Stellglieds, insbesondere in Richtung der Schwenkachse, eine Rotation des Drehkulissenteils bewirkbar ist. Dadurch ist ein schnelles, pneumatisch angetriebenes Verschwenken ermöglicht, wobei - aufgrund des Drehkulissenteils - der dazu erforderliche konstruktive Aufwand niedrig und die Stabilität hoch ist.

Das Drehkulissenteil weist dabei vorzugsweise eine gerade Röhrenform auf, die sich in Umfangsrichtung um eine Mittelachse und insbesondere in einem konstanten Abstand zu der Mittelachse erstreckt. In einer Wandung des röhrenförmigen Drehkulissenteils ist dabei ein länglicher Kulissenführungsschlitz ausgebildet, welcher sich zumindest abschnittsweise quer zur Mittelachse erstreckt. Der Kulissenführungsschlitz erstreckt sich sowohl in Richtung der Mittelachse als auch in Umfangsrichtung um die Mittelachse, sodass mittels eines darin eingreifenden Kulissensteins, der in Richtung der Mittelachse verlagert wird, eine Drehung des Drehkulissenteils um die Mittelachse bewirkbar ist. Der hier erwähnte Kulissenstein ist dabei auf einer Oberfläche des Stellglieds ausgebildet. Das Stellglied weist vorzugsweise einen zylinderförmigen Grundkörper auf, der vorzugsweise passgenau in das röhrenförmige Drehkulissenteil eingreift und darin entlang der Mittelachse verlagerbar ist, wobei der Kulissentstein in dem Kulissenführungsschlitz insbesondere zweiseitig zwangsgeführt wird, um die Rotation des Drehkulissenteils zu bewirken.

Unter einer linearen Verlagerung des Stellglieds wird hier insbesondere eine Verlagerung entlang der Mittelachse des Drehkulissenteils verstanden. Die hier vorgesehene rotationsfeste Verbindung mit dem Drehkulissenteils bezieht sich dabei insbesondere auf eine Rotation um die Mittelachse des Drehkulissenteils.

Vorzugsweise entspricht die Mittelachse des Drehkulissenteils - im montierten Zustand - der Schwenkachse und/oder einer Mittelachse des insbesondere zylinderförmigen Stellglieds.

Zur linearen Verlagerung des Stellglieds, und somit zum Verschwenken des Schwenkarms, ist hier vorzugsweise eine erste Druckkammer vorgesehen, welche - bezüglich der Mittelachse - auf einer ersten Seite des Stellglieds angeordnet ist und strömungstechnisch mit einer Oberfläche des Stellglieds verbunden ist. Die erste Druckkammer ist mit einem Überdruck und/oder Unterdruck beaufschlagbar, um zumindest einseitig eine Kraft auf das Stellglied auszuüben. Vorzugsweise ist die erste Druckkammer entweder nur mit Überdruck oder nur mit Unterdruck beaufschlagbar, sodass kein Druckwechsel zur Steuerung erforderlich ist und die Verlagerung des Stellglieds allein durch Betätigung von Ventilen und somit besonders schnell erfolgen kann. Ferner ist dadurch nur ein einzelne Überdruckversorgung oder Unterdruckversorgung erforderlich. Besonders bevorzugt ist die erste Druckkammer mit der Unterdruckversorgungseinrichtung insbesondere strömungstechnisch verbunden, welche ebenfalls die Saugstellen mit Unterdruck versorgt. Alternativ ist eine separate Druckversorgungseinrichtung vorgesehen, welche mit der erste Druckkammer strömungstechnisch verbunden ist.

Gemäß einer Weiterbildung der Erfindung ist vorgesehen, dass der Basiskörper ein erstes Federelement aufweist, welches durch pneumatisches Verlagern des Stellglieds spannbar ist, und im gespannten Zustand eine Federkraft auf das Stellglied ausübt, durch welche das Stellglied in eine Ausgangsstellung zurückgedrängt wird. Die hier angesprochene Ausgangsstellung bezieht sich dabei vorzugsweise auf eine Ausgangsstellung bezüglich einer Schwenkstellung des Schwenkarms. Da das pneumatische Verlagern des Stellglieds zu einem Verschwenken des Schwenkarms führt, wird das Federelement insbesondere bei diesem Verschwenken des Schwenkarms in den gespannten Zustand versetzt. Dadurch ist eine kostengünstige und konstruktiv einfach herzustellende Rückstellung des Stellglieds geschaffen.

Vorzugsweise weist die Unterdruckhandhabungsvorrichtung ein zweites Federelement auf, welches die Saugstelle nach einer pneumatisch angetriebenen Verlagerung in eine - hinsichtlich des Abstands - Ausgangsstellung zurückdrängt. Das zweite Federelement ist dabei bevorzugt am oder im Schwenkarm angeordnet.

Ferner bevorzugt weist die Unterdruckhandhabungsvorrichtung ein drittes und/oder viertes Federelement auf, welches im Bereich der Saugstelle, insbesondere am oder im Schwenkarm und/oder einem der Saugkörper, befestigt ist und eingerichtet ist, um die erste und/oder zweite Saugstelle nach einer pneumatisch angetriebenen Höhenverstellung in eine - hinsichtlich der Höhenverstellung - Ausgangsstellung zurückzudrängen.

Gemäß einer Weiterbildung der Erfindung ist vorgesehen, dass das Stellglied als doppeltwirkender Zylinder ausgebildet ist, welcher zweiseitig pneumatisch mit Druck beaufschlagbar ist. Dadurch ist in beide Schwenkrichtungen eine sehr schnelle Anpassung an spezifische Objekte, die mittels der Unterdruckhandhabungsvorrichtung zu greifen sind, möglich.

Vorzugsweise wird das Zurückstellen des Stellglieds in die Ausgangsstellung zusätzlich zum pneumatischen angetriebenen Rückstellen von einem insbesondere mechanischen Federmechanismus unterstützt. Dadurch kann ein Zurückstellen schneller und sicherer erfolgen.

Vorzugsweise ist eine zweite Druckkammer vorgesehen, welche in dem Basiskörper ausgebildet ist und strömungstechnisch mit einer zweiten Seite des Stellglieds verbunden ist, wobei die zweite Seite - bezüglich einer Richtung der Mittelachse - gegenüberliegend zu der ersten Seite des Stellglieds ausgebildet ist. Dadurch kann mittels der ersten Druckkammer eine Kraft in eine erste Richtung und mittels der zweiten Druckkammer eine Kraft in eine zweite, zu der ersten Richtung entgegengesetzte Richtung auf das Stellglied ausgeübt werden. Dadurch ist das Stellglied in zwei entgegengesetzte Richtungen pneumatisch angetrieben verlagerbar, wodurch der Schwenkarm in beide Schwenkrichtungen, also von der ersten Schwenkstellung in die zweite Schwenkstellung und von der zweiten Schwenkstellung in die erste Schwenkstellung, pneumatisch angetrieben verschwenkbar ist.

Zur Versorgung der zweiten Druckkammer ist diese vorzugsweise mit der Unterdruckversorgungseinrichtung und/oder der separaten Druckversorgungsvorrichtung strömungstechnisch verbindbar, insbesondere in zumindest einer Ventilstellung einer Steuerventilvorrichtung strömungstechnisch verbunden.

Vorzugsweise sind eine dritte und/oder vierte Druckkammer zum Einstellen einer Länge des Schwenkarms vorgesehen, wobei die dritte und/oder vierte Druckkammer mit Druckluft beaufschlagbar und strömungstechnisch einem Längen-Stellglied verbunden sind. Vorzugsweise ist der Schwenkarm beziehungsweise die zweite Saugstelle mittels der dritten oder vierten Druckkammer in zumindest einer Richtung, bevorzugt aber mittels der dritten und vierten Druckkammer in beide Richtungen pneumatisch angetrieben längenverstellbar beziehungsweise abstandsverstellbar.

Ferner bevorzugt sind weitere Druckkammern, insbesondere eine fünfte und/oder sechste Druckkammer für die erste Saugstelle und/oder eine siebte und achte Druckkammer für die zweite Saugstelle, vorgesehen. Dabei sind die fünfte und/oder sechste Druckkammer ausgebildet und eingerichtet, um eine Höhe der ersten Saugstelle einzustellen. Ferner sind die siebte und/oder achte Druckkammer ausgebildet und eingerichtet, um eine Höhe der zweiten Saugstelle einzustellen.

Auch die dritte, vierte, fünfte, sechste, siebte und/oder achte Druckkammer sind vorzugsweise mit der Unterdruckversorungseinrichtung und/oder der separaten Druckversorgungseinrichtung strömungstechnisch verbindbar, und jeweils in zumindest einer Ventilstellung der Steuerventilvorrichtung strömungstechnisch verbunden.

Die erste Saugstelle und/oder die zweite Saugstelle sind vorzugsweise in zumindest eine Richtung pneumatisch angetrieben höhenverstellbar, wobei bei einer nur einseitigen pneumatischen Verstellbarkeit die Rückstellung mittels eines Federmechanismus erfolgt. Besonders bevorzugt sind beide Saugstellen mittels der fünfte, sechsten, siebten und achten Druckkammer in beide Richtungen pneumatisch angetrieben höhenverstellbar.

Gemäß einer Weiterbildung der Erfindung ist vorgesehen, dass der Schwenkarm zum Verstellen des Abstands zwischen dem Basiskörper und der zweiten Saugstelle ein erstes Armelement und ein zweites Armelement aufweist, wobei das erste Armelement an dem Basiskörper befestigt ist, und wobei das zweite Armelement entlang des ersten Armelements zumindest abschnittsweise, insbesondere entlang eines Führungsabschnitts, verlagerbar angelagert ist. Dadurch ist eine flexible Positionierung der an dem Schwenkarm angeordneten zweiten Saugstelle ermöglicht.

Die zweite Saugstelle ist dabei bevorzugt an dem zweiten Armelement angeordnet, sodass die zweite Saugstelle zum einen aufgrund der Schwenkbarkeit des ersten Armelements verschwenkbar und zum anderen aufgrund der Längenverstellbarkeit des zweiten Armelements längenverstellbar ist.

Besonders bevorzugt ist die zweite Saugstelle an einem dem Basiskörper abgewandten endständigen Endabschnitt des zweiten Armelements angeordnet, sodass die Unterdruckhandhabungsvorrichtung einen großen Aktionsradius aufweist.

Bei dem ersten Armelement handelt es sich um ein längliches, insbesondere gerades, basiskörperseitiges Armelement, über welches der Basiskörper mit dem zweiten Armelement verbunden ist. Das erste Armelement ist gegenüber dem Basiskörper verschwenkbar. Vorzugsweise ist das erste Armelement nicht längenverstellbar. Bevorzugt ist das erste Armelement einstückig ausgebildet, wobei es möglich ist, dass - insbesondere um weitere Funktionen umzusetzen und/oder zu Befestigungs- und/oder Detektionszwecken - weitere Elemente an dem ersten Armelement angelagert sind. Dadurch ist insgesamt ein stabiles, erstes Armelements geschaffen.

Das zweite Armelement ist gegenüber dem Basiskörper in Bezug auf eine Längserstreckung des Schwenkarms längenverstellbar und vorzugsweise gerade und/oder einstückig ausgebildet. Dabei ist das zweite Armelement vorzugsweise an dem ersten Armelement derart angelagert, dass das erste Armelement gegenüber dem zweiten Armelement in Richtung der Längserstreckung des Schwenkarms an dem zweiten Armelement verlagerbar ist. Dadurch bilden das erste Armelement und das zweite Armelement zusammenbetrachtet eine Teleskopstange, wobei das zweite Armelement als längsverstellbarer Teleskoparm dient.

Vorzugsweise ist das zweite Armelement rotationsfest an dem ersten Armelement befestigt. Ferner bevorzugt ist das erste Armelement parallel zu, insbesondere auf einer gemeinsamen Längsachse mit, dem zweiten Armelement angeordnet. Dadurch ist der Schwenkarm insgesamt stabil und zu dem Basiskörper beabstandete Gelenkstellen sind vermieden.

Gemäß einer besonderen Weiterbildung der Erfindung ist vorgesehen, dass das zweite Armelement verdrehsicher zum ersten Armelement gelagert ist. Vorzugsweise ist dabei auch das erste Armelement verdrehsicher zum Basiskörper angeordnet. Dadurch ist die Stabilität des Schwenkarms weiter erhöht.

Vorzugsweise weisen die Armelemente zur Verdrehsicherung zwei ineinandergreifende Führungselemente auf, wobei ein erstes Führungselement an dem ersten Armelement und ein zweites Führungselement an dem zweiten Armelement angeordnet ist, wobei sich die Führungselemente in Richtung der Abstandsverstellung und/oder parallel zur Längserstreckung des ersten und/oder zweiten Armteils erstrecken. Insbesondere können die Führungselemente als Führungsstangen oder Führungsschiene ausgebildet sein.

Als "verdrehsicher" wird hier verstanden, dass das jeweilige Element in Bezug auf eine Drehung um die eigene Längsachse fixiert ist. Insbesondere wird darunter verstanden, dass eine Drehung in Umfangsrichtung um die Längsverstellrichtung durch zumindest eine Festlegungsstruktur und/oder eine Befestigungselement vermieden ist.

Gemäß einer Weiterbildung der Erfindung ist vorgesehen, dass das erste Armelement und/oder das zweite Armelement zumindest abschnittsweise einen ovalen, insbesondere ellipsenförmigen Querschnitt aufweist. Dadurch ist die Stabilität der Armelement für sich genommen erhöht, wobei der ovale Querschnitt zugleich zur Verdrehsicherung beitragen kann.

Unter dem hier angesprochenen, ovalen Querschnitt wird insbesondere ein Querschnitt senkrecht zur Längsachse des ersten und/oder zweiten Armelements verstanden.

Vorzugsweise ist dabei eine große Halbachse des ovalen, insbesondere ellipsenförmigen Querschnitts in einem Winkel zur Richtung der Saugrichtung und/oder - beim Greifen und Handhaben des Objekts - in Richtung einer Belastungskraft ausgerichtet, wobei der Winkel kleiner als 45°, vorzugsweise kleiner als 30°, vorzugsweise kleiner als 10°, vorzugsweise kleiner als 3° ist. Besonders bevorzugt ist die große Halbachse genau in Saugrichtung oder in Richtung der Belastungskraft oder parallel dazu ausgerichtet. Dadurch ist der Schwenkarm besonders stabil.

Vorzugsweise durchgreift der Abschnitt mit dem ovalen Querschnitt eine unrunde Öffnung. Besonders bevorzugt ist die unrunde Öffnung dabei unsymmetrisch, insbesondere rechteckig mit ungleichen Seitenlängen und/oder oval, ausgebildet. Besonders bevorzugt liegen zumindest drei, vorzugsweise alle vier Scheitelpunkte des ovalen Querschnitts an einer Innenseite der Öffnung an, sodass eine Verdrehung des ersten und/oder zweiten Armelements durch den Kontakt der Scheitelpunkte mit der Innenseite der Öffnung blockiert ist.

Gemäß einer Weiterbildung der Erfindung ist vorgesehen, dass ein insbesondere zweiter Führungsabschnitt des zweiten Armelements eine insbesondere erste, ovale Öffnung des ersten Armelements durchgreift und beim pneumatischen Einstellen des Abstands entlang des insbesondere zweiten Führungsabschnitts durch die insbesondere erste ovale Öffnung geführt wird. Alternativ oder zusätzlich ist vorgesehen, dass ein insbesondere erster Führungsabschnitt des ersten Armelements eine insbesondere zweite ovale Öffnung des zweiten Armelements durchgreift und beim pneumatischen Einstellen des Abstands entlang des insbesondere ersten Führungsabschnitt durch die insbesondere zweite, ovale Öffnung geführt wird. Durch das Ineinandergreifen des ersten beziehungsweise zweiten Führungsabschnitts in die zweite beziehungsweise erste Öffnung wird die Verdrehsicherheit und zugleich eine fehlerunanfällige Variante der Teleskopfunktion bereitgestellt, bei der die eigentliche Führung geschützt im Inneren einer der beiden Armteile erfolgt.

Die ovalen Öffnungen und die Führungsabschnitte sind dabei vorzugsweise passgenau zueinander ausgebildet, sodass die Führungsabschnitte verdrehsicher in die jeweiligen Öffnungen einführbar und darin längsverlagerbar sind. Insbesondere ist also die erste, ovale Öffnung passgenau zum zweiten Führungsabschnitt und die zweite, ovale Öffnung passgenau zum ersten Führungsabschnitt ausgebildet.

Vorzugsweise weist hierbei der gesamte Führungsabschnitt den ovalen Querschnitt auf, sodass eine insgesamt eine durchgängige und verdrehsichere Führung vorliegt. Der Führungsabschnitt erstreckt sich dabei zumindest über eine Länge, die einer maximalen Längenänderung des längenverstellbaren Schwenkarms entspricht. Der Führungsabschnitt ist insbesondere zumindest so groß wie die betragsmäßige Abstandsdifferenz aus erstem und zweitem Abstand. Dabei sind an einem Anfang und an einem Ende des Führungsabschnitts jeweils vorzugsweise mechanische Stopperelemente vorgesehen, die eine weitere Linearverlagerung verhindern. Dazu weisen die Stopperelemente vorzugsweise eine radiale Erstreckung insbesondere einen Durchmesser auf, der größer ist als die erste ovale Öffnung beziehungsweise größer als die zweite ovale Öffnung.

Gemäß einer Weiterbildung der Erfindung ist vorgesehen, dass eine Steuerungsvorrichtung vorgesehen ist, welche ausgebildet und eingerichtet ist, um den Schwenkarm in eine erste Konfigurationsstellung und in eine zweite Konfigurationsstellung zu bringen. Dadurch ist die Unterdruckhandhabungsvorrichtung flexibel einsetzbar und schnell und automatisiert an die verschiedenen Einsatzbereiche anpassbar.

Vorzugsweise sind die erste und zweite Konfigurationsstellung ausgewählt aus insgesamt - hinsichtlich der Schwenk- und Abstandseinstellung - vier möglichen spezifischen Konfigurationen. Die Unterdruckhandhabungsvorrichtung ist also derart ausgebildet und eingerichtet, dass genau zwei Abstände und genau zwei Schwenkstellungen einstellbar sind. Dies ermöglicht eine einfache und schnelle Steuerung, da jeder Abstand und jede Schwenkstellung hinsichtlich der Bewegungsrichtung eine Endstellung darstellt.

Dabei ist vorzugsweise vorgesehen, dass die erste Konfigurationsstellung und/oder die zweite Konfigurationsstellung zumindest eine Einstellung bezüglich der Längeneinstellung und zumindest eine Einstellung bezüglich der Schwenkstellung sowie vorzugsweise zusätzlich zumindest eine Einstellung bezüglich der Höheneinstellung beinhaltet. Die erste Konfigurationsstellung und/oder die zweite Konfigurationsstellung umfassen also zum einen eine Längeneinstellung und eine Schwenkstellung des Schwenkarms. Die Steuervorrichtung ist also ausgebildet und eingerichtet, um eine oder mehrere Informationen betreffend die Längeneinstellung, die Schwenkstellung und/oder die Höheneinstellung zu erhalten und den Schwenkarm und/oder die Saugstellen der Unterdruckhandhabungsvorrichtung entsprechend der erhaltenen Informationen in eine Zielstellung, nämlich die erste oder zweite Konfigurationsstellung, zu bringen.

Gemäß einer Weiterbildung der Erfindung ist vorgesehen, dass die Unterdruckhandhabungsvorrichtung zumindest einen Sensor aufweist, welcher ausgebildet und eingerichtet ist, um einen Parameter des zu greifenden Objekts zu erkennen und wobei der Sensor mit der Steuerungsvorrichtung wirkverbunden ist, um die Unterdruckhandhabungsvorrichtung, insbesondere einen Abstand der zweiten Saugstelle und/oder eine Schwenkstellung des Schwenkarms, unter Berücksichtigung des einen Parameters einzustellen. Dadurch ist eine automatisierte Erfassung von zu handhabenden Objekten und eine darauf abgestimmte Einstellung der Unterdruckhandhabungsvorrichtung ermöglicht.

Unter einem Parameter wird hier insbesondere ein Objekttyp, eine Objektgröße, eine Objektform und/oder eine Objektausrichtung verstanden.

Der erkannte Parameter ist dabei bevorzugt einer der Konfigurationsstellungen, nämlich der ersten oder der zweiten Konfigurationsstellung, zugeordnet, wobei die Steuerungsvorrichtung ausgebildet und eingerichtet ist, um in Abhängigkeit von dem erkannten Parameter die erste oder zweite Konfigurationsstellung einzustellen.

Vorzugsweise ist die Unterdruckhandhabungsvorrichtung ausgebildet und eingerichtet, um den Parameter automatisch zu erfassen und nach der Erfassung - unter Berücksichtigung des Parameters - eine dem Parameter zugeordnete Konfigurationsstellung, nämlich die erste oder zweite Konfigurationsstellung, automatisch einzustellen. Ferner bevorzugt ist die Unterdruckhandhabungsvorrichtung ausgebildet und eingerichtet, um einen weiteren Parameter eines weiteren Objekts zu erfassen, und nach der Erfassung des weiteren Parameters - unter Berücksichtigung des weiteren Parameters - eine dem weiteren Parameter zugeordnete Konfigurationsstellung, insbesondere die erste oder zweite Konfigurationsstellung, automatisch einzustellen, wobei besonders bevorzugt die dem weiteren Parameter zugeordnete Konfigurationsstellung zu der zuvor eingestellten Konfigurationsstellung des zuerst erfassten Parameters verschieden ist. Dadurch kann schnell und in Abhängigkeit von einer Objekteigenschaft, welche durch den Parameter ermittelt wird, zwischen verschiedenen Konfigurationsstellungen gewechselt werden, sodass verschiedene Objekte jeweils optimal gegriffen und verlagert werden können.

Alternativ oder zusätzlich ist der Sensor ausgebildet und eingerichtet, um eine Kollisionsüberwachung mit externen Objekten und/oder Personen durchzuführen.

Gemäß einer Weiterbildung der Erfindung ist vorgesehen, dass der Basiskörper zumindest ein Steuerventil zum Ansteuern der ersten Saugstelle und/oder zweiten Saugstelle aufweist. Insbesondere ist dabei ein erstes Steuerventil zum Ansteuern der ersten Saugstell und ein zweites Steuerventil zum Ansteuern der zweiten Saugstelle vorgesehen. Indem das Steuerventil am beziehungsweise im Basiskörper angeordnet ist, wird vermieden, dass Schaltelemente an beweglich gelagerten Teilen, insbesondere dem Schwenkarm, gelagert sind, sodass insgesamt robuster Aufbau geschaffen ist. Insbesondere aufgrund der aufgrund der Pneumatik hohen Stellgeschwindigkeiten beim Verstellen des Schwenkarms werden dadurch Beschädigungen am Steuerventil vermieden.

Vorzugsweise ist Steuerungsvorrichtung ausgebildet und eingerichtet, um das zumindest eine Steuerventil zu betätigen. Dabei ist das erste Steuerventil ausgebildet und eingerichtet, um eine strömungstechnische Verbindung zwischen der Unterdruckversorgungseinrichtung und/oder der separaten Druckversorgung einerseits und der ersten Saugstelle andererseits zu sperren und freizugeben. Dadurch reguliert das erste Steuerventil, ob an der ersten Saugstelle ein Überdruck oder ein Unterdruck anliegt. Entsprechend ist das zweite Steuerventil ausgebildet und eingerichtet, um eine strömungstechnische Verbindung zwischen der Unterdruckversorgungseinrichtung und/oder der separaten Druckversorgung einerseits und der zweiten Saugstelle andererseits zu sperren und freizugeben. Dadurch reguliert das zweite Steuerventil, ob an der zweiten Saugstelle ein Überdruck oder ein Unterdruck anliegt.

Vorzugsweise ist die Steuerventilvorrichtung mit mehreren Ventilen vorgesehen, wobei vorzugsweise sämtliche Ventile der Steuerventilvorrichtung mittels der Steuerungsvorrichtung betättigbar sind. Die Steuerventilvorrichtung umfasst dabei vorzugsweise zumindest ein erstes Ventil zum Einstellen der Schwenkstellung des Schwenkarms, zumindest ein zweites Ventil zum Einstellen des Abstands der zweiten Saugstelle, zumindest ein drittes Ventil zur Höheneinstellung der ersten Saugstelle und/oder zumindest ein viertes Ventil zur Höheneinstellung der zweiten Saugstelle.

Dabei ist das erste Ventil vorzugsweise ausgebildet und eingerichtet, um eine strömungstechnische Verbindung - ausgehend von der Unterdruckversorgungseinrichtung und/oder der separaten Druckversorgungseinrichtung - zu der ersten und/oder zweiten Druckkammer zu sperren und freizugeben. Ferner bevorzugt ist das zweite Ventil ausgebildet und eingerichtet, um eine strömungstechnische Verbindung zu der dritten und/oder vierten Druckkammer zu sperren und freizugeben. Ferner bevorzugt ist das dritte Ventil ausgebildet und eingerichtet, um eine strömungstechnische Verbindung zu der fünften und/oder sechsten Druckkammer zu sperren und freizugeben. Ferner bevorzugt ist das vierte Ventil ausgebildet und eingerichtet, um eine strömungstechnische Verbindung zu der siebten und/oder achten Druckkammer zu sperren und freizugeben.

Besonders bevorzugt sind sämtliche Ventile, insbesondere das erste, zweite, dritte und vierte Ventil, am oder im Basiskörper angeordnet, wobei bevorzugt keine Ventile an beweglichen Elementen, und/oder besonders bevorzugt kein Steuerventil am Schwenkarm angeordnet ist.

Vorzugsweise sind das erste, zweite, dritte, vierte Ventil und/oder das zumindest eine Steuerventil jeweils als bistabiles Ventil ausgebildet, welches - nach Schalten in eine erste Ventilstellung - die erste Ventilstellung ohne Energiezufuhr aufrechterhält, und - nach Schalten in eine zweite Ventilstellung - die zweiten Ventilstellung ohne Energiezufuhr aufrechterhält.

Gemäß einer Weiterbildung der Erfindung ist vorgesehen, dass die Unterdruckhandhabungsvorrichtung ausgebildet und eingerichtet ist, um beim Greifen des Objekts zumindest eine Saugstelle nicht mit Unterdruck zu versorgen. Dadurch ist die Flexibilität beim Greifen von Objekten weiter erhöht. Insbesondere für den Fall, dass aufgrund der Objektgeometrie eine der Saugstelle nicht in Kontakt mit dem Objekt bringbar ist, wird hierdurch vermieden, dass die nicht-kontaktierte Saugstelle ins Leere saugt.

Vorzugsweise ist die Unterdruckhandhabungsvorrichtung ausgebildet und eingerichtet, um in diesem Fall eine strömungstechnische Verbindung zu der betroffenen Saugstelle, welche nicht mit Unterdruck versorgt wird, zu sperren, insbesondere indem das erste oder zweite Steuerventil in eine Sperrstellung gestellt wird.

Die Aufgabe wird insbesondere auch gelöst, indem ein Unterdruckhandhabungssystem mit zumindest zwei Unterdruckhandhabungsvorrichtungen nach einer der zuvor beschriebenen Ausführungsformen geschaffen wird, wobei die Basiskörper der Unterdruckhandhabungsvorrichtungen aneinander befestigt sind. Die zumindest zwei Unterdruckhandhabungsvorrichtungen umfassen dabei insbesondere eine erste und eine zweite Unterdruckhandhabungsvorrichtung. Dadurch wird ein Unterdruckhandhabungssystem mit einer größeren Anzahl von Saugstellen geschaffen, sodass auch größere und/oder kompliziert geformte Objekte gegriffen werden können.

Vorzugsweise sind dabei ein erster Schwenkarm der ersten Unterdruckhandhabungsvorrichtung und ein zweiter Schwenkarm der zweiten Unterdruckhandhabungsvorrichtung in zumindest einer Schwenkstellung, vorzugsweise in einer Ruhestellung, - ausgehend von den aneinander befestigten Basiskörpern - in entgegengesetzte Richtungen ausgerichtet. Bevorzugt ist dabei der erste Basiskörper der ersten Unterdruckhandhabungsvorrichtung an seiner dem ersten Schwenkarm abgewandten Rückseite an einer dem zweiten Schwenkarm abgewandten Rückseite des zweiten Basiskörpers der zweiten Unterdruckhandhabungsvorrichtung befestigt. Dadurch ist eine große Spannweite realisiert, sodass auch große Objekte sicher und flexibel gegriffen werden können.

Ferner bevorzugt weist das Unterdruckhandhabungssystem eine dritte Unterdruckhandhabungsvorrichtung mit einem dritten Basiskörper und einem dritten Schwenkarm sowie eine vierte Unterdruckhandhabungsvorrichtung mit einem vierten Basiskörper und einem vierten Schwenkarm auf, wobei die dritte

Unterdruckhandhabungsvorrichtung zur ersten Unterdruckhandhabungsvorrichtung gleichgerichtet an dem ersten Basiskörper der ersten Unterdruckhandhabungsvorrichtung, insbesondere an einer Seitenwand des ersten Basiskörpers, angeordnet und befestigt ist. Dabei ist die vierte Unterdruckhandhabungsvorrichtung zu der zweiten Unterdruckhandhabungsvorrichtung gleichgerichtet an dem zweiten Basiskörper, insbesondere einer Seitenwand des zweiten Basiskörpers, angeordnet, wobei eine dem vierten Schwenkarm abgewandte Rückseite des vierten Basiskörpers einer dem dritten Schwenkarm abgewandten Rückseite des dritten Basiskörpers zugewandt ist.

Besonders bevorzugt sind die Unterdruckhandhabungsvorrichtungen alle miteinander verbunden, wobei vorzugsweise ein oberes und/oder ein unteres Abdeckungselement vorgesehen ist, welche auf einer Oberseite und/oder Unterseite der jeweiligen Basiskörper befestigt sind und diese somit aneinander fixieren. Die Oberseiten und Unterseiten sind dabei bevorzugt quer, insbesondere senkrecht zu den Rückseiten und/oder den Seitenwänden und/oder den Schwenkachsen ausgerichtet. Dadurch ist eine kompakte, stabile und flexibel anpassbare Bauweise realisiert.

Insbesondere ist dabei vorgesehen, dass die vorstehend beschriebene Unterdruckhandhabungsvorrichtung eine funktionale Einheit in einem größeren, modular aus mehreren Unterdruckhandhabungsvorrichtungen aufgebauten Unterdruckhandhabungssystem bildet. Dabei ist insbesondere jede der Unterdruckhandhabungsvorrichtungen unabhängig von den anderen Unterdruckhandhabungsvorrichtungen ansteuerbar, insbesondere derart, dass der jeweilige Schwenkarm ein- und ausfahrbar, verschwenkbar und/oder die Saugstellen höhenverstellbar sind, und/oder derart, dass die jeweiligen Saugstellen - insbesondere durch individuelles Sperren beziehungsweise Freigeben der jeweiligen Steuerventile - aktivierbar und deaktivierbar sind.

Gemäß einer Weiterbildung der Erfindung ist vorgesehen, dass das Unterdruckhandhabungssystem ausgebildet und eingerichtet ist, um an der ersten oder zweiten Saugstelle einen ersten oder zweiten Hub verschieden zu einem weiteren Hub an einer der anderen Saugstellen einzustellen. Unter einem Hub wird hier insbesondere eine Höheneinstellung verstanden. Dadurch ist das Unterdruckhandhabungssystem an eine Vielzahl verschiedener Objektgeometrien, insbesondere verschiedene Oberflächengeometrien der Objekte, anpassbar, sodass diese Objekte sicher gegriffen und verlagert werden können. Insbesondere können dadurch auch Kollisionen zwischen den Saugstellen und dem Objekt vermieden werden, ganz besonders in Fällen, in denen eine der Saugstellen inaktiv ist und nicht zum Greifen des Objekts genutzt werden soll.

Dabei ist vorzugsweise vorgesehen, dass der erste und/oder zweite Hub eine Höheneinstellung der ersten und/oder zweiten Saugstelle der ersten Unterdruckhandhabungsvorrichtung betreffen, wobei der weitere Hub eine Höheneinstellung einer Saugstelle einer anderen Unterdruckhandhabungsvorrichtung, insbesondere der zweiten, dritten oder vierten Unterdruckhandhabungsvorrichtung, betrifft.

Besonders bevorzugt wird dabei der erste Hub, der zweite Hub und/oder der weitere Hub in Abhängigkeit von dem von dem Sensor erfassten Parameter eingestellt.

Gemäß einer weiteren bevorzugten Weiterbildung der Erfindung ist vorgesehen, dass die Steuerungsvorrichtung ausgebildet und eingerichtet ist, um die erste Unterdruckhandhabungsvorrichtung in einen ersten Konfigurationsstellung zu bringen, und um die zweite Unterdruckhandhabungsvorrichtung in einen zweiten Konfigurationsstellung zu bringen. Dabei ist vorgesehen, dass der ersten Konfigurationszustand von dem zweiten Konfigurationszustand verschieden ist. Dadurch ist das Unterdruckhandhabungssystem flexibel an verschiedene Objektgeometrien anpassbar, sodass die Objekte sicher gegriffen und verlagert werden können.

Weitere Einzelheiten und vorteilhafte Ausgestaltungen der Erfindung sind der folgenden Beschreibung zu entnehmen, anhand derer die in den Figuren dargestellte Ausführungsform der Erfindung näher beschrieben und erläutert ist.

Es zeigen:
- Fig. 1: eine Unterdruckhandhabungsvorrichtung in einer perspektivischen Ansicht in einer ersten Schwenkstellung;
- Fig. 2: die in Figur 1 gezeigte Unterdruckhandhabungsvorrichtung mit einem ausgefahrenen Teleskoparm;
- Fig. 3: eine Draufsicht auf die Unterdruckhandhabungsvorrichtung in einer zweiten Schwenkstellung;
- Fig. 4: eine Draufsicht auf die Unterdruckhandhabungsvorrichtung in der zweiten Schwenkstellung mit ausgefahrenem Teleskoparm;
- Fig. 5: eine Draufsicht auf die Unterdruckhandhabungsvorrichtung in der ersten Schwenkstellung;
- Fig. 6: eine Draufsicht auf die Unterdruckhandhabungsvorrichtung in der ersten Schwenkstellung mit ausgefahrenem Teleskoparm;
- Fig. 7: einen Querschnitt durch die Unterdruckhandhabungsvorrichtung;
- Fig. 8: einen Längsschnitt durch die Unterdruckhandhabungsvorrichtung;
- Fig. 9: eine vergrößerte Detailansicht des in Figur 8 gezeigten Längsschnitts;
- Fig. 10: eine perspektivische Ansicht eines Unterdruckhandhabungssystems mit mehreren Unterdruckhandhabungsvorrichtungen;
- Fig. 11: eine perspektivische Ansicht des in Figur 10 dargestellten Unterdruckhandhabungssystems mit verschiedenen Konfigurationsstellungen der Unterdruckhandhabungsvorrichtungen.

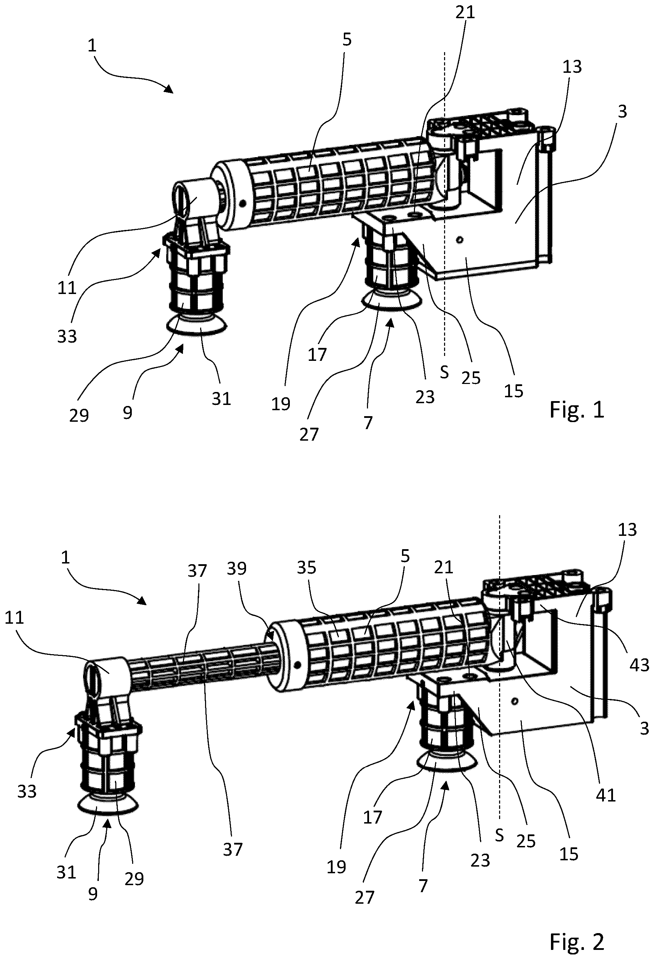

Fig. 1 zeigt eine Unterdruckhandhabungsvorrichtung 1 mit einem Basiskörper 3, an dem ein Schwenkarm 5 schwenkbar gelagert ist. Die Unterdruckhandhabungsvorrichtung 1 weist zwei Saugstellen, nämlich eine erste Saugstelle 7 und eine zweite Saugstelle 9 auf. Die erste Saugstelle 7 ist an dem Basiskörper 3 selbst und somit ortsfest zu diesem angeordnet. Die zweite Saugstelle 9 ist gegenüber dem Basiskörper 3 und der ersten Saugstelle 7 sowohl verschwenkbar als auch abstandsverstellbar angeordnet, indem sie an dem Schwenkarm 5 befestigt ist. In dem in Figur 1 dargestellten Ausführungsbeispiel ist die zweite Saugstelle 9 insbesondere an einem zur Schwenkachse S radial endständigen Endabschnitt 11 des Schwenkarms 5 angeordnet, sodass die Unterdruckhandhabungsvorrichtung 1 eine große Reichweite aufweist.

Das Basiskörper 3 weist hier insbesondere eine L-ähnliche Winkelform mit einem ersten Winkelarm 13 und einem zweiten Winkelarm 15. Die beiden Winkelarme sind fest miteinander verbunden und hier insbesondere integral miteinander ausgebildet. Der erste Winkelarm 13 ist dabei quer, hier insbesondere senkrecht zu dem zweiten Winkelarm 15 ausgerichtet und erstreckt sich dabei parallel zur Schwenkachse S. Der zweite Winkelarm 15 ist dadurch senkrecht zur Schwenkachse S ausgerichtet und schneidet diese.

Die erste Saugstelle 7 und die zweite Saugstelle 9 sind ausgebildet und eingerichtet, um ein hier nicht dargestelltes Objekt durch ein an den Saugstellen angelegten Unterdruck anzusaugen und im angesaugten Zustand ortsfest zu der jeweiligen Saugstelle zu halten, um dadurch das Objekt zu fixieren und/oder zu verlagern. Zu diesem Zweck weist die erste Saugstelle 7 einen ersten Saugkörper 17 auf, der an einem oberen Ende 19 mit zumindest einem Befestigungsmittel 21 an dem Basiskörper 3 befestigt ist. In Figur 1 ist der erste Saugkörper 17 an einem von dem zweiten Winkelarm 15 ausgehenden, und radial zur Schwenkachse S und relativ zu dem ersten Winkelarm 13 hervorspringenden, ersten Steg 23 befestigt, sodass ein Teil des ersten Saugkörpers 17 in einer durch den ersten Steg 23 und dem zweiten Winkelarm 15 gebildeten Einbuchtung angeordnet und somit besonders geschützt ist.

Zur Erhöhung der Stabilität ist der erste Steg 23 durch zwei seitliche, am unteren Ende abgeschrägte Stützwände gestützt, wobei in Figur 1 nur eine der beiden Stützwände, nämlich die dem Betrachter zugewandte Stützwand 25 erkennbar ist. Die Stützwände sind dabei vorzugsweise integral mit dem zweiten Winkelarm 15 und somit dem Basiskörper 3 insgesamt ausgebildet.

Der erste Saugkörper 17 weist an seinem unteren Ende eine vorzugsweise elastisch ausgebildete Dichtlippe 27 auf, welche sich beim Greifen des Objekts flexibel an eine Oberfläche des Objekts anschmiegt.

Ein vorzugsweise zum ersten Saugkörper 17 baugleicher, zweiter Saugkörper 29 stellt an dessen unteren Ende die zweite Saugstelle 9 bereit. Der zweite Saugkörper 29 weist bevorzugt ebenso eine elastische Dichtlippe 31 auf. Am oberen Ende 33 ist der zweite Saugkörper an dem Schwenkarm 5, insbesondere dem Endabschnitt 11, befestigt.

Wie insbesondere in Zusammenschau mit Fig. 2 erkennbar ist, ist der Schwenkarm 5 als Teleskoparm ausgebildet, welcher ein basiskörperseitiges, erstes Armelement 35 und ein in das erste Armelement 35 eingreifendes, zweites Armelement 37 aufweist. Dabei greift das zweite Armelement 37 hier in eine ovale Öffnung 39 des ersten Armelements 35 ein. Beim pneumatischen Verstellen des Abstands wird das radial äußere, zweite Armelement 37 von der ovalen Öffnung 39 geführt und verdrehsicher gehalten. Alternativ oder zusätzlich können zwei ineinandergreifende Führungselemente an dem ersten Armelement 35 einerseits und dem zweiten Armelement 37 andererseits ausgebildet sein, entlang welcher die Armelemente derart aneinander geführt werden, dass eine Rotation um deren Achse beziehungsweise in Umfangsrichtung um die Abstandsverstellrichtung vermieden ist.

Der Schwenkarm 5 ist hier insbesondere in der zwischen erstem Winkelarm 13 und zweiten Winkelarm 15 gebildeten Stufe verschwenkbar gelagert. Ein Schwenklager 41 des Schwenkarms 5 ist dabei zwischen einer Innenseite des zweiten Winkelarms 15 und einem von dem ersten Winkelarm 13 ausgehenden, zweiten Steg 43 angeordnet. Dadurch ist zwischen dem zweiten Steg 43 und dem zweiten Winkelarm 15 eine Aussparung gebildet, in welcher der Schwenkarm 5 in Umfangsrichtung um die Schwenkachse S mit Ausnahme des ersten Winkelarms 13 frei schwenkbar ist.

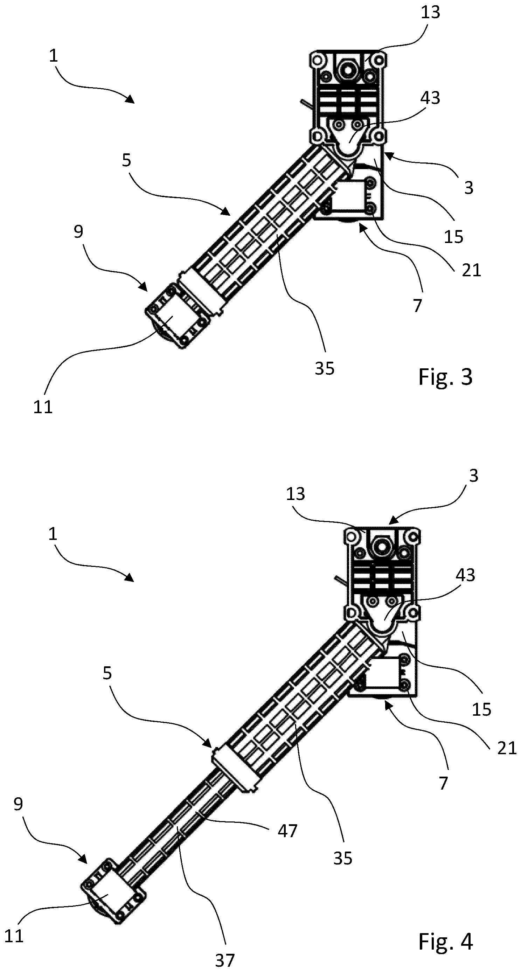

Während die Unterdruckhandhabungsvorrichtung 1 in den Figuren 1 und 2 in einer ersten Schwenkstellung, welche auch als Ruhestellung bezeichnet wird, dargestellt ist, zeigen **Fig. 3** und **Fig. 4** die Unterdruckhandhabungsvorrichtung 1 in einer zweiten Schwenkstellung. Zwischen diesen beiden Schwenkstellungen ist die Unterdruckhandhabungsvorrichtung 1 vorzugsweise ohne Zwischenstellungen pneumatisch angetrieben verschwenkbar.

Die Unterdruckhandhabungsvorrichtung 1 wird vorzugsweise durch eine erste Anschlagstruktur in der ersten Schwenkstellung und durch eine zweite Anschlagstruktur in der zweiten Schwenkstellung gestoppt. Dadurch kann die Unterdruckhandhabungsvorrichtung 1 besonders schnell zwischen der ersten und der zweiten Schwenkstellung verschwenkt werden.

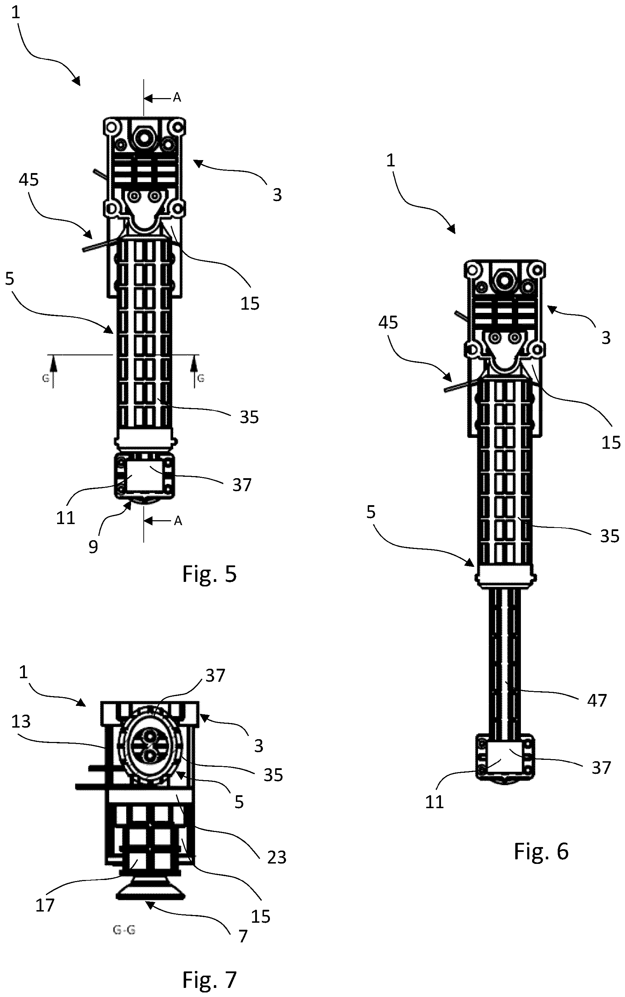

**Fig. 5** und **Fig. 6** zeigen die Unterdruckhandhabungsvorrichtung 1 in derselben Perspektive wie in den Figuren 3 und 4, wobei die Unterdruckhandhabungsvorrichtung 1 in den Figuren 5 und 6 jedoch in der ersten Schwenkstellung gezeigt ist.

Hier ist zudem ein Federmechanismus mit einem Federelement 45 erkennbar, welcher dazu dient, den Schwenkarm 5 aus der zweiten Schwenkstellung zurück in die erste Schwenkstellung zu stellen, nachdem der Schwenkarm 5 pneumatisch angetrieben in die zweite Schwenkstellung gestellt wurde. Dieser Federmechanismus kann alternativ oder zusätzlich zu einer pneumatischen Rückstellung vorgesehen sein.

In **Fig. 7** ist die Unterdruckhandhabungsvorrichtung 1 entlang einer Querschnittsebene G-G gezeigt, wobei die Querschnittsebene G-G in Figur 5 angedeutet ist. In der Querschnittsansicht in Figur 7 ist erkennbar, dass der Schwenkarm 5 einen ovalen Querschnitt aufweist, wodurch zum einen hohe Stabilität und zum anderen eine Verdrehsicherheit gewährleistet ist.

Dabei ist sowohl das erste Armelement 35 als auch das zweite Armelement 37 zumindest in diesem in Figur 7 dargestellten Abschnitt oval geformt.

Da ein Führungsabschnitt 47 des zweiten Armelements 37 in Figur 5 in das erste Armelement 35 vollständig eingeführt ist, erstreckt sich der Führungsabschnitt 47 über die Querschnittsebene G-G hinaus, sodass das zweite Armelement 37 in der Querschnittsansicht in Figur 7 als ein inneres Oval erkennbar ist.

Der Führungsabschnitt 47 ist in den Figuren 2, 4 und 6 erkennbar, da dort die zweite Saugstelle 9 im zweiten Abstand zum Basiskörper 3, also im ausgefahrenen Zustand, dargestellt ist.

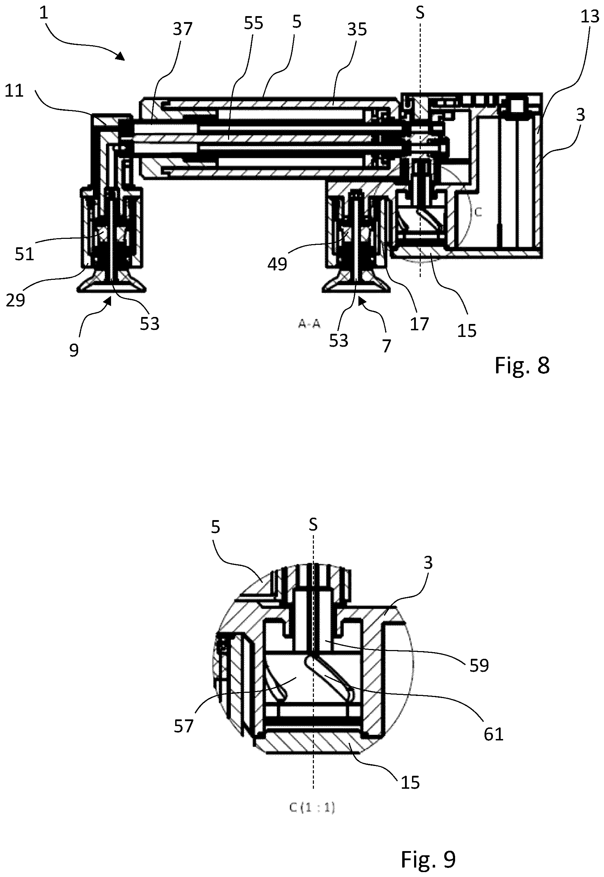

Neben der Querschnittsebene G-G ist in Figur 5 außerdem eine Längsschnittebene A-A angedeutet. **Fig. 8** zeigt die Unterdruckhandhabungsvorrichtung 1 entlang dieses Längsschnitts A-A.

Dabei ist erkennbar, dass die erste Saugstelle 7 und die zweite Saugstelle 9 jeweils höhenverstellbar ausgebildet sind. Insbesondere ist hier im oberen Bereich des ersten Saugkörpers 17 ein erstes Höhen-Stellglied 49 erkennbar. Dieses erste Höhen-Stellglied 49 ist pneumatisch antreibbar, indem eine in der Figur 8 oberhalb des Stellglieds angeordnete, erste Druckkammer mit einem Überdruck beaufschlagt wird. Eine Rückstellung des Höhen-Stellglieds 49 in die Ausgangsstellung erfolgt mittels eines Druckwechsels in der Druckkammer, einer weiteren Druckkammer und/oder einem federgetriebenen Rückstellmechanismus.

Der zweite Saugköper 29 weist eine entsprechende, zweite Druckkammer auf, um ein zweites Höhen-Stellglied 51 des zweiten Saugkörpers 29 anzutreiben. Zu diesem Zweck ist die zweite Druckkammer mit einem Überdruck beaufschlagbar. Da die beiden Saugkörper, erster Saugkörper 17 und zweiter Saugkörper 29, vorzugsweise wie in dem hier dargestellten Ausführungsbeispiel baugleich ausgebildet sind, erfolgt auch hier die Rückstellung in die Ausgangsstellung mit einem Druckwechsel in der zweiten Druckkammer, einer weiteren Druckkammer und/oder einem Federmechanismus.

Außerdem sind in Figur 8 Druckführungskanäle 53 erkennbar, über welche die erste Saugstelle 17 und die zweite Saugstelle 29 mit einem Unterdruck zum Greifen des Objekts versorgt werden. Diese Druckführungskanäle 53 durchziehen die Saugkörper entlang beziehungsweise parallel zu einer zentralen Achse und verbinden somit die Saugstellen weiteren Druckführungskanälen in dem Schwenkarm 5 beziehungsweise dem Basiskörper 3, sodass insgesamt die Saugstellen mit einer Unterdruckversorgungseinrichtung strömungstechnisch verbindbar und im Betrieb der Unterdruckhandhabungsvorrichtung 1 verbunden sind.

Insbesondere können die Druckführungskanäle 53 zumindest abschnittsweise auch außen an den Saugkörpern, dem Schwenkarm 5 und/oder dem Basiskörper 3 angebracht sein, wodurch eine zusätzliche Verdrehsicherung erfolgt.

Ferner ist in Figur 8 ein Abstandsstellglied 55 zum Einstellen des ersten und/oder zweiten Abstands erkennbar. Dieses Abstandsstellglied 55 ist pneumatisch angetrieben, indem insbesondere zum Einstellen des zweiten Abstands eine zum Abstandsstellglied 55 benachbarte, insbesondere basiskörperseitig angeordnete Abstands-Druckkammer mit einem Überdruck beaufschlagt wird. Zum Rückstellen auf den ersten Abstand wird die Abstands-Druckkammer mit einem Unterdruck beaufschlagt. Alternativ oder zusätzlich ist das AbstandsStellglied derart doppeltwirkend ausgebildet, dass einen zur Abstands-Druckkammer gegenüberliegende Druckkammer mit einem Überdruck beaufschlagt wird, wodurch zum Abstandspositionswechsel lediglich eine Ventilbetätigung und kein Druckwechsel erforderlich ist. Unterstützend kann ein zusätzlicher Federmechanismus vorgesehen sein, der das Abstandsstellglied 55 und/oder das zweite Armelement 37 derart zurückdrängt, dass die zweite Saugstelle 9 auf den ersten Abstand eingestellt wird, wodurch - in dem hier dargestellten Ausführungsbeispiel - der Teleskoparm eingefahren wird.

**Fig. 9** zeigt die in Figur 8 markierte Detailansicht C, welche eine Drehkulissenführung zum Verschwenken des Schwenkarms 5 in vergrößerter Darstellung zeigt. Dabei weist der Basiskörper 3 ein pneumatisch linear-verlagerbares Stellglied auf, welches hier auch als Schwenk-Stellglied bezeichnet wird. Das Schwenk-Stellglied greift in ein Drehkulissenteil 57 ein, wobei das Drehkulissenteil 57 über einen oberen Fortsatz 59 rotationsfest mit dem Schwenkarm 5 verbunden ist. Wie in der Figur 9 erkennbar ist das Drehkulissenteil hier als röhrenförmiges Teil mit schräg ausgerichteten Kulissenführungsschlitzen 61 ausgebildet. Indem das Drehkulissenteil 57 gegenüber dem Basiskörper 3 rotierbar in dem Basiskörper 3 angeordnet ist, wird eine lineare Verlagerung des Schwenk-Stellglieds in eine Rotationsbewegung des Drehkulissenteils 57 und somit in eine Schwenkbewegung des Schwenkarms 5 umgesetzt.

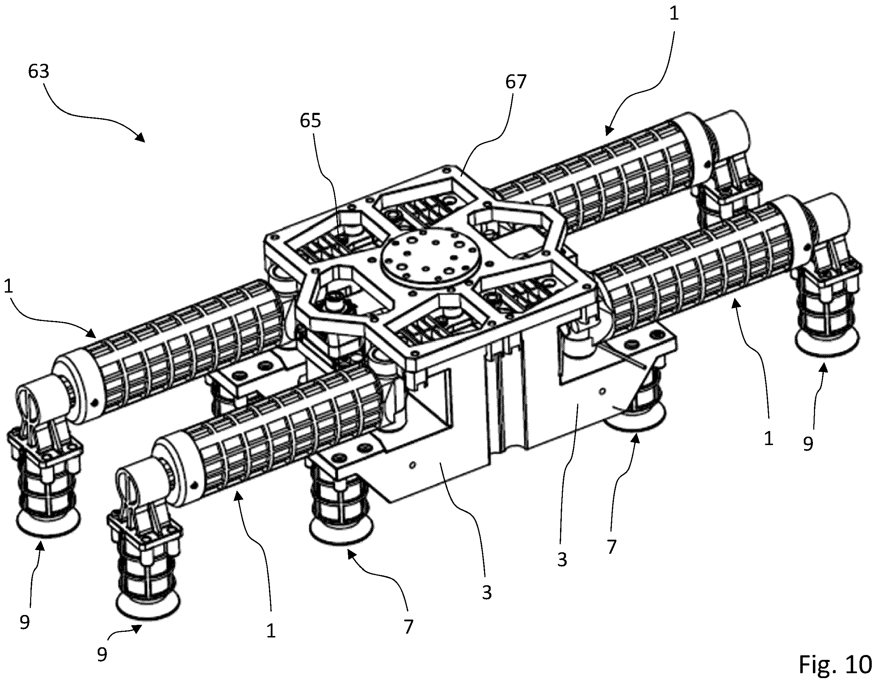

**Fig. 10** zeigt nun ein Unterdruckhandhabungssystem 63 mit insbesondere vier Unterdruckhandhabungsvorrichtungen 1 in einer perspektivischen Ansicht. Die Unterdruckhandhabungsvorrichtungen 1 sind dabei alle aneinander befestigt, indem auf einer jeweiligen Oberseite 65 der vier Basiskörper 3 eine obere Abdeckung 67 montiert ist, welche die Unterdruckhandhabungsvorrichtungen 1 miteinander verbindet.

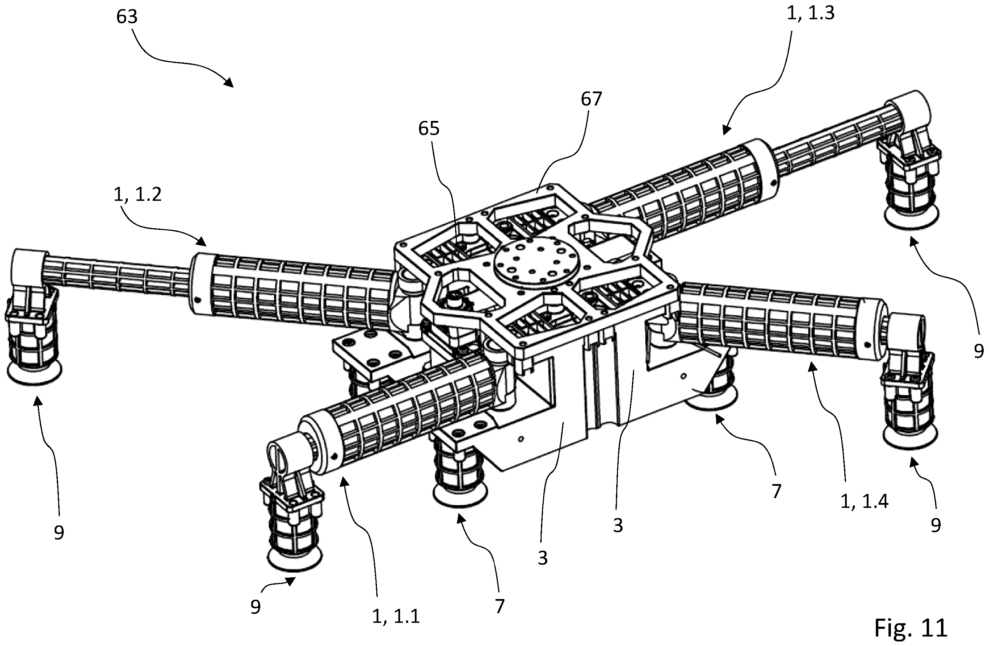

Dabei sind - wie in **Fig. 11** dargestellt - die einzelnen Unterdruckhandhabungsvorrichtungen 1 jeweils bevorzugt individuell ansteuerbar, sodass eine erste Unterdruckhandhabungsvorrichtung 1.1 des Unterdruckhandhabungssystems 63 auf die erste Schwenkstellung, also die vom Basiskörper 3 gerade ausgehende Ruhestellung, und den ersten Abstand, also mit eingefahrenem Teleskoparm, einstellbar ist, während eine zweite Unterdruckhandhabungsvorrichtung 1.2 auf die zweite Schwenkstellung, also gegenüber der ersten Schwenkstellung abgewinkelt, und einen zweiten Abstand, also mit ausgefahrenem Teleskoparm, einstellbar ist. Darüber hinaus ist in Figur 11 eine dritte Unterdruckhandhabungsvorrichtung 1.3 auf die erste Schwenkstellung und den zweiten Abstand, sowie eine vierte Unterdruckhandhabungsvorrichtung auf die zweite Schwenkstellung und den ersten Abstand eingestellt.

Dadurch ist eine größere Anzahl an ersten Saugstellen 7 und zweiten Saugstellen 9 bereitgestellt und insgesamt ist eine Vielzahl an Kombinationsmöglichkeiten von Schwenk- und Abstandseinstellungen der einzelnen Unterdruckhandhabungsvorrichtungen 1 möglich.

## Patentansprüche

1. Unterdruckhandhabungsvorrichtung (1) mit einem Basiskörper (3), einem an dem Basiskörper (3) schwenkbar gelagerten Schwenkarm (5) und zumindest zwei Saugstellen zum Greifen eines Objekts, wobei die Unterdruckhandhabungsvorrichtung (1) vorzugsweise am Basiskörper (3) eine erste Saugstelle (7) aufweist, wobei der Schwenkarm (5) eine zweite Saugstelle (9) aufweist, wobei die zweite Saugstelle (9) an dem Schwenkarm (5) derart längenverstellbar angeordnet ist, dass ein Abstand zwischen der zweiten Saugstelle (9) und dem Basiskörper (3) auf einen ersten Abstand und einen zweiten Abstand pneumatisch angetrieben einstellbar ist, wobei der Schwenkarm (5) zwischen einer ersten Schwenkstellung und einer zweiten Schwenkstellung pneumatisch angetrieben verschwenkbar ist.

2. Unterdruckhandhabungsvorrichtung (1) nach Anspruch 1, wobei die erste Saugstelle (7) und/oder die zweite Saugstelle (9) quer zur Längsrichtung und quer zur Schwenkrichtung vorzugsweise pneumatisch angetrieben höhenverstellbar ausgebildet sind.

3. Unterdruckhandhabungsvorrichtung (1) nach einem der vorhergehenden Ansprüche, wobei die erste Saugstelle (7) - zumindest in Längsrichtung und in Schwenkrichtung - ortsfest an dem Basiskörper (3) angeordnet ist.

4. Unterdruckhandhabungsvorrichtung (1) nach einem der vorhergehenden Ansprüche, wobei der Basiskörper (3) zum Verschwenken des Schwenkarms (5) ein pneumatisch verlagerbares Stellglied aufweist, welches mit einem mit dem Schwenkarm (5) rotationsfest verbundenen Drehkulissenteil (57) ineinandergreift, wobei durch lineare Verlagerung des Stellglieds eine Rotation des Drehkulissenteils (57) bewirkbar ist.

5. Unterdruckhandhabungsvorrichtung (1) nach Anspruch 4, wobei der Basiskörper (3) ein Federelement (45) aufweist, welches durch pneumatisches Verlagern des Stellglieds spannbar ist, und im gespannten Zustand eine Federkraft auf das Stellglied ausübt, durch welche das Stellglied in eine Ausgangsstellung zurückgedrängt wird.

6. Unterdruckhandhabungsvorrichtung (1) nach Anspruch 4 oder Anspruch 5, wobei das Stellglied als doppeltwirkender Zylinder ausgebildet ist, welcher zweiseitig pneumatisch mit Druck beaufschlagbar ist.

7. Unterdruckhandhabungsvorrichtung (1) nach einem der vorhergehenden Ansprüche, wobei der Schwenkarm (5) zum Verstellen des Abstands zwischen dem Basiskörper (3) und der zweiten Saugstelle (9) ein erstes Armelement (35) und ein zweites Armelement (37) aufweist, wobei das erste Armelement (35) an dem Basiskörper (3) befestigt ist, und wobei das zweite Armelement (37) entlang des ersten Armelements (35) zumindest abschnittsweise verlagerbar angelagert ist.

8. Unterdruckhandhabungsvorrichtung (1) nach Anspruch 7, wobei das erste Armelement (35) und/oder das zweite Armelement (37) zumindest abschnittsweise einen ovalen Querschnitt aufweist.

9. Unterdruckhandhabungsvorrichtung (1) nach Anspruch 7 oder Anspruch 8, wobei ein Führungsabschnitt (47) des zweiten Armelements (37) eine ovale Öffnung (39) des ersten Armelements (35) durchgreift und beim pneumatischen Einstellen des Abstands entlang des Führungsabschnitt (47) durch die ovale Öffnung geführt wird.

10. Unterdruckhandhabungsvorrichtung (1) nach einem der vorhergehenden Ansprüche, wobei eine Steuerungsvorrichtung vorgesehen ist, welche ausgebildet und eingerichtet ist, um den Schwenkarm (5) in eine erste Konfigurationsstellung und in eine zweite Konfigurationsstellung zu bringen.

11. Unterdruckhandhabungsvorrichtung (1) nach Anspruch 10, wobei die Unterdruckhandhabungsvorrichtung (1) zumindest einen Sensor aufweist, welcher ausgebildet und eingerichtet ist, um einen Parameter des zu greifenden Objekts zu Erkennen und wobei der Sensor mit der Steuerungsvorrichtung wirkverbunden ist, um die Unterdruckhandhabungsvorrichtung (1), insbesondere einen Abstand der zweiten Saugstelle (9) und/oder eine Schwenkstellung des Schwenkarms (5), unter Berücksichtigung des einen Parameters einzustellen.

12. Unterdruckhandhabungsvorrichtung (1) nach einem der vorhergehenden Ansprüche, wobei der Basiskörper (3) zumindest ein Steuerventil zum Ansteuern der ersten Saugstelle (7) und/oder zweiten Saugstelle (9) aufweist.

13. Unterdruckhandhabungsvorrichtung (1) nach einem der vorhergehenden Ansprüche, wobei die Unterdruckhandhabungsvorrichtung (1) ausgebildet und eingerichtet ist, um beim Greifen des Objekts zumindest eine Saugstelle nicht mit Unterdruck zu versorgen.

14. Unterdruckhandhabungssystem (63) mit zumindest zwei Unterdruckhandhabungsvorrichtungen (1), insbesondere einer ersten Unterdruckhandhabungsvorrichtung (1.1) und einer zweiten Unterdruckhandhabungsvorrichtung (1.2), nach einem der vorhergehenden Ansprüche, wobei die Basiskörper (3) der Unterdruckhandhabungsvorrichtungen (1) aneinander befestigt sind.

15. Unterdruckhandhabungssystem (63) nach Anspruch 14, wobei das Unterdruckhandhabungssystem (63) ausgebildet und eingerichtet ist, um an der ersten Saugstelle (7) oder der zweiten Saugstelle (9) der insbesondere ersten Unterdruckhandhabungsvorrichtung (1.1) einen ersten oder zweiten Hub verschieden zu einem weiteren Hub an einer der anderen Saugstellen einzustellen.
